# EUROPEAN PATENT SPECIFICATION

(11) **EP 3 627 443 B1**
(45) Date of publication and mention of the grant of the patent: **14.07.2021**
(21) Application number: 18195731.7
(22) Date of filing: 20.09.2018
(51) Int. Cl.: G06T 7/00

(54) **CLASSIFYING A LYMPH NODE POSITION IN RESPECT OF A TUMOR POSITION**
KLASSIFIZIERUNG EINER LYMPHKNOTENPOSITION BEZÜGLICH EINER TUMORPOSITION
CLASSIFICATION D'UNE POSITION DE GANGLION LYMPHATIQUE PAR RAPPORT À UNE POSITION DE TUMEUR

(43) Date of publication of application: 25.03.2020
(73) Proprietor: Siemens Healthcare GmbH, 91052 Erlangen (DE)
(72) Inventor: Grimmer, Rainer, 91056 Erlangen (DE); Tietjen, Christian, 90763 Fürth (DE)

(56) References cited:
- US-B1- 9 349 178
- FUJITA TAMAKI ET AL: "Anatomical classification of breast sentinel lymph nodes using computed tomography-lymphography", ANATOMICAL SCIENCE INTERNATIONAL, BLACKWELL PUBLISHING, GB, vol. 93, no. 4, 3 May 2018 (2018-05-03), pages 487-494, XP036548711, ISSN: 1447-6959, DOI: 10.1007/S12565-018-0441-2 [retrieved on 2018-05-03]
- KANITSAR A ET AL: "CPR - curved planar reformation", VIS 2002. IEEE VISUALIZATION 2002. PROCEEDINGS. BOSTON, MA, OCT. 27 - NOV. 1, 2002; [ANNUAL IEEE CONFERENCE ON VISUALIZATION], NEW YORK, NY : IEEE, US, 1 November 2002 (2002-11-01), pages 37-44, XP031212945, ISBN: 978-0-7803-7498-0
- SHOMONA GRACIA JACOB: "Evolving Efficient Clustering and Classification Patterns in Lymphography Data through Data Mining Techniques", INTERNATIONAL JOURNAL ON SOFT COMPUTING, vol. 3, no. 3, 31 August 2012 (2012-08-31) , pages 119-132, XP055570929, ISSN: 2229-7103, DOI: 10.5121/ijsc.2012.3309

## Description

For a successful therapy of malignant tumors a correct assessment of the tumor extent and therewith the grade and malignancy of the tumor is crucial. This is in clinical routine done with the TNM staging method which consist of rating of the tumor (T in TNM), the identification of the affected lymph nodes (N) and whether there are distant metastases (M) given or not.

The identification of the affected lymph nodes is important, as malignant tumors most likely first spread via the lymphatic system and in the flow direction of the lymphatic system. The lymph nodes which are nearest to the tumor are called sentinel lymph nodes. If these lymph nodes are not infected, further spreading of the tumor is improbable.

The assessment of lymph nodes brings special and significant challenges for the radiologist during reading of the images of the patient. These nodes are hard to find and the connecting lymph channels are normally not visible in tomographic imaging.

The challenging task for the radiologist is now to find the lymph nodes in the patient around the cancer areas and understand how the lymph flow happens in the dedicated body region. In conventional lymph node assessment, the radiologist scrolls through the axial images and searches for lymph nodes which are potentially interesting. Then he brings the nodes in relation to the tumor and measures the prominent nodes which are relevant in respect to his mental model of the flow direction of the lymphatic system.

FUJITA TAMAKI ET AL: "Anatomical classification of breast sentinel lymph nodes using computed tomography-lymphography", ANATOMICAL SCIENCE INTERNATIONAL, BLACKWELL PUBLISHING, GB, vol. 93, no. 4, 3 May 2018, pages 487 - 494, discloses a method for classification of breast sentinel lymph nodes using computed tomography-lymphography.

KANITSAR A. ET AL: "CPR - curved planar reformation", PROCEEDINGS ANNUAL IEEE VISUALIZATION VIS 2002. BOSTON, MA, OCT. 27 - NOV. 1, 2002, NEW YORK, NY: IEEE, US, 1 November 2002, pages 37 - 44, discloses methods for generating curved planar reformation images.

SHOMONA GRACIA JACOB: "Evolving Efficient Clustering and Classification Patterns in Lymphography Data through Data Mining Techniques", INTERNATIONAL JOURNAL ON SOFT COMPUTING, vol. 3, no. 3, 31 August 2012, pages 119 - 132, discloses data mining techniques with respect to lymphography data.

The underlying technical problem of the invention is to facilitate an alternative assessment of a lymph node position in respect of a tumor position. This problem is solved by the subject matter of the independent claims. The dependent claims are related to further aspects of the invention.

In one aspect the invention relates to a computer-implemented method for classifying a lymph node position in respect of a tumor position, comprising
- receiving medical imaging data,
- receiving lymphatic flow atlas data,
- determining the tumor position in the medical imaging data,
- determining a vessel structure in an area of the tumor position in the medical imaging data, the vessel structure being a blood vessel structure,
- generating a reformatted image comprising an unfolded view of the vessel structure in the area of the tumor position based on the medical imaging data,
- generating, in the reformatted image, a lymphatic flow direction representation based on the lymphatic flow atlas data,
- classifying the lymph node position in respect of the tumor position based on the lymphatic flow direction representation in the reformatted image.

The classifying the lymph node position in respect of the tumor position based on the lymphatic flow direction representation in the reformatted image lymph node position can comprise a step of generating lymph node position classification data in respect of the tumor position based on the lymphatic flow direction representation in the reformatted image. The method can further comprise a step of providing the lymph node position classification data. A lymphatic flow direction representation can be implemented, for example, as a marker indicating a direction of a lymphatic flow.

The tumor position can be determined, for example, based on a human interaction indicating the tumor position and/or by applying a tumor position detection algorithm onto the medical imaging data. The human interaction indicating the tumor position may comprise pointing to the tumor position on a screen that shows at least a portion of the medical imaging data.

The reformatted image can be generated, for example, based on the vessel structure. The main lymph channels proceed next to the blood vessels. Therefore lymph nodes, for example sentinel lymph nodes, can be detected by following the vessels.

Due to the anatomical nature of the relation of the tumor and the vessel structure, an unfolded view of the relevant part of the lymphatic system can be implicitly displayed in the reformatted image. Compared to the conventional lymph node assessment that involves scrolling through many slices, in the approach presented herein, a lower amount of time is needed to find lymph nodes and the probability to miss relevant lymph nodes is lower, resulting in improved quality and efficiency.

In another aspect the lymph node position is classified as either downstream or upstream of the tumor position in respect of the lymphatic flow direction representation. This allows more precise information which lymph nodes are the sentinel lymph nodes (downstream ones) and to which lymph nodes the tumor will most probably not spread (since they are upstream).

In another aspect, the generating the reformatted image comprises a step of calculating a curved planar reformation of the vessel structure. The unfolded view of the vessel structure can be, for example, a curved planar reformatted view of the vessel structure. In particular, a centerline of the vessel structure in the area of the tumor position can be determined. The curved planar reformation of the vessel structure can be calculated, for example, by applying a curved planar reformation algorithm onto the medical image data.

In another aspect the reformatted image further comprises the tumor position. The tumor position can be included in respect to and into the reformatted data. This can be achieved, for example, by extending the width of the curved planar reformation so that the tumor position and/or the entire tumor is covered. Thereby, an unfolded view of the vessel structure that is enhanced with the tumor position can be obtained.

Furthermore, an unfolded view of a vessel structure that is extended in the width to cover the tumor position would implicitly display also the relevant part of the lymphatic system. For example, a reformatted image can be generated, the reformatted image comprising the tumor position, an unfolded view of the vessel structure in the area of the tumor position and, implicitly, an unfolded view of the lymphatic system in the area of the tumor position. Based on the relation of the tumor position and the vessel structure a region of interest in respect to lymph nodes can be automatically determined. In particular, this eases providing the information to the surgeon in which direction with respect to the tumor position and how far the lymph nodes would have to be removed.

In another aspect the method further comprises a step of determining the lymph node position in the reformatted image. The lymph node position can be determined, for example, based on a human interaction indicating the lymph node position based on the reformatted image and/or by applying a lymph node detection algorithm onto the reformatted image.

In another aspect the method further comprises a step of determining evaluation data comprising at least one of lymph node parameter data of a lymph node at the lymph node position, tumor parameter data of a tumor at the tumor position, a distance between the lymph node position and the tumor position along the vessel structure, and a lymphatic flow atlas information in respect of the lymphatic flow direction representation, or a combination thereof.

The evaluation data can be determined, for example, based on a human interaction and/or by applying one or more dedicated algorithms onto the medical imaging data and/or onto the reformatted image.

The tumor parameter data can comprise, for example, at least one of a volume, a size, a maximum diameter and an eccentricity of the tumor or a combination thereof. The lymph node parameter data can comprise, for example, at least one of a volume, a size, a maximum diameter, in particular a maximum orthogonal diameter, and an eccentricity of the lymph node or a combination thereof.

In another aspect the method further comprises a step of calculating a lymph node relevance parameter and/or a lymph node malignancy probability of the lymph node at the lymph node position based on the evaluation data.

In another aspect the lymph node relevance parameter and/or the lymph node malignancy probability is calculated by applying a trained machine learning algorithm onto the evaluation data. The method can further comprise a step of providing the lymph node relevance parameter and/or the lymph node malignancy probability.

A combination of the reformatted image enhanced with atlas information and the machine learning algorithm allows an efficient and high quality assessment of the importance of the different lymph nodes in the tumor area and the lymph node staging. The trained machine learning algorithm can be trained based on databases comprising evaluation data related to a tumor and relevant lymph nodes obtained, for example, in previous assessments of other patients. The machine learning algorithm can be based, for example, on at least one of support vector machines, Bayesian classifiers, k-means clustering, decision trees, convolutional neural networks, deep belief networks, deep residual learning, reinforcement learning, recurrent neural networks, inductive programming or a combination thereof.

In one aspect the invention relates to a data processing system for classifying a lymph node position in respect of a tumor position, comprising
- a medical imaging data receiving unit for receiving medical imaging data,
- a lymphatic flow atlas data receiving unit for receiving lymphatic flow atlas data,
- a tumor position determining unit for determining the tumor position in the medical imaging data,
- a vessel structure determining unit for determining a vessel structure in an area of the tumor position in the medical imaging data, the vessel structure being a blood vessel structure,
- a reformatted image generating unit generating a reformatted image comprising an unfolded view of the vessel structure in the area of the tumor position based on the medical imaging data,
- a lymphatic flow direction representation generating unit for generating, in the reformatted image, a lymphatic flow direction representation based on the lymphatic flow atlas data,
- a lymph node position classifying unit for classifying the lymph node position in respect of the tumor position based on the lymphatic flow direction representation in the reformatted image.

In another aspect the data processing system is configured to implement the method according to one or more of the disclosed aspects.

In one aspect the invention relates to a computed tomography device comprising a data processing system for classifying a lymph node position in respect of a tumor position according to one or more of the disclosed aspects.

In one aspect the invention relates to a computer program product comprising program elements which induce a data processing system to carry out the steps of the method according to one or more of the disclosed aspects, when the program elements are loaded into a memory of the data processing system.

In one aspect the invention relates to a computer-readable medium on which program elements are stored that can be read and executed by a data processing system, in order to perform the steps of the method according to one or more of the disclosed aspects, when the program elements are executed by the data processing system.

The medical imaging data can be, for example, computed tomography data or magnetic resonance imaging data or combination thereof. In particular, the medical imaging data can be three-dimensional and/or related to a volume. The volume can be a part of a patient body. In particular, the volume can comprise a tumor, a vessel structure in the area of the tumor and at least one lymph node. The vessel structure can be, for example, an arterial blood vessel structure, comprising one or more arteries, or a venous blood vessel structure, comprising one or more veins.

Any of the units mentioned herein or any interface between the units can be embodied in form of hardware and/or software. In particular, an interface can be embodied in form of at least one of a PCI-Bus, a USB or a Firewire. In particular, a unit can comprise hardware elements and/or software elements, for example a microprocessor, a field programmable gate array (an acronym is "FPGA") or an application specific integrated circuit (an acronym is "ASIC").

The data processing system can, for example, comprise at least one of a cloud-computing system, a distributed computing system, a computer network, a computer, a tablet computer, a smartphone or the like. The data processing system can comprise hardware and/or software. The hardware can be, for example, a processor system, a memory system and combinations thereof. The hardware can be configurable by the software and/or be operable by the software. Calculations for performing steps of a method and/or for training an algorithm may be carried out in a processor.

Data, in particular, the medical imaging data, the lymphatic flow atlas data and/or parameters, can be received, for example, by receiving a signal that carries the data and/or by reading the data from a computer-readable medium. Data, in particular, the lymph node position classification data, the evaluation data, the lymph node relevance parameter, the lymph node malignancy probability and/or parameters, can be provided, for example, by transmitting a signal that carries the data and/or by writing the data into a computer-readable medium and/or by displaying the data on a display.

The computer program product can be, for example, a computer program or comprise another element apart from the computer program. This other element can be hardware, for example a memory device, on which the computer program is stored, a hardware key for using the computer program and the like, and/or software, for example, a documentation or a software key for using the computer program. A computer-readable medium can be embodied as non-permanent main memory (e.g. random access memory) or as permanent mass storage (e.g. hard disk, USB stick, SD card, solid state disk).

Advantages which are described with respect to one embodiment of the present invention are, wherever applicable, also advantageous of other embodiments of the present invention.

Any of the algorithms mentioned herein can be based on one or more of the following architectures: convolutional neural networks, deep belief networks, deep residual learning, deep reinforcement learning, recurrent neural networks, Siamese networks, generative adversarial networks or auto-encoders. In particular, the trained machine learning algorithm can be embodied as a deep learning algorithm and/or as a convolutional neural network.

In the context of the present invention, the expression "based on" can in particular be understood as meaning "using, inter alia". In particular, wording according to which a first feature is calculated (or generated, determined etc.) based on a second feature does not preclude the possibility of the first feature being calculated (or generated, determined etc.) based on a third feature.

Reference is made to the fact that the described methods and the described units are merely preferred example embodiments of the invention and that the invention can be varied by a person skilled in the art, without departing from the scope of the invention as it is specified by the claims.

The invention will be illustrated below with reference to the accompanying figures using example embodiments. The illustration in the figures is schematic and highly simplified and not necessarily to scale.
Fig. 1 shows a diagram illustrating a method for classifying a lymph node position in respect of a tumor position,
Fig. 2 shows a data processing system for classifying a lymph node position in respect of a tumor position,
Fig. 3 shows an example of the medical imaging data,
Fig. 4 shows an example of the reformatted image.

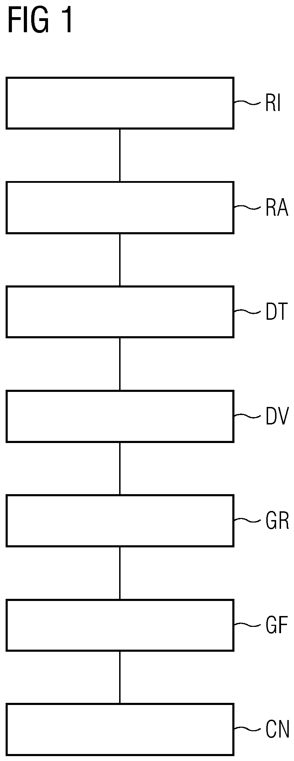

Fig. 1 shows a diagram illustrating a method for classifying a lymph node position N1, N2, N3 in respect of a tumor position T, comprising
- receiving RI medical imaging data D,
- receiving RA lymphatic flow atlas data,
- determining DT the tumor position T in the medical imaging data D,
- determining DV a vessel structure B in an area of the tumor position L in the medical imaging data D,
- generating GR a reformatted image R comprising an unfolded view of the vessel structure B in the area of the tumor position L based on the medical imaging data D,
- generating GF, in the reformatted image R, a lymphatic flow direction representation F1, F2, F3 based on the lymphatic flow atlas data,
- classifying CN the lymph node position N1, N2, N3 in respect of the tumor position T based on the lymphatic flow direction representation F1, F2, F3 in the reformatted image R.

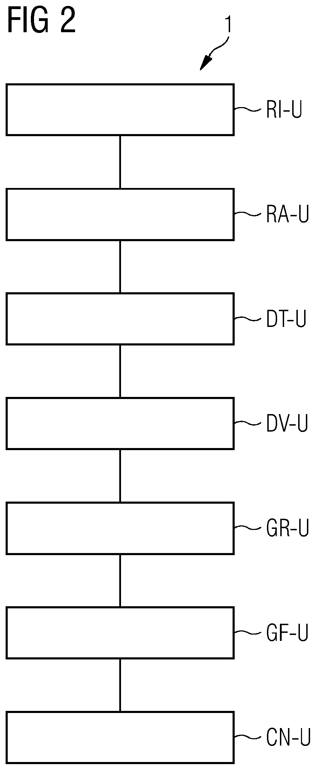

Fig. 2 shows a data processing system 1 for classifying a lymph node position N1, N2, N3 in respect of a tumor position T, comprising
- a medical imaging data receiving unit RI-U for receiving RI medical imaging data D,
- a lymphatic flow atlas data receiving unit RA-U for receiving RA lymphatic flow atlas data,
- a tumor position determining unit DT-U for determining DT the tumor position T in the medical imaging data D,
- a vessel structure determining unit DV-U for determining DV a vessel structure B in an area of the tumor position L in the medical imaging data D,
- a reformatted image generating unit GR-U generating GR a reformatted image R comprising an unfolded view of the vessel structure B in the area of the tumor position L based on the medical imaging data D,
- a lymphatic flow direction representation generating unit GF-U for generating GF, in the reformatted image R, a lymphatic flow direction representation F1, F2, F3 based on the lymphatic flow atlas data,
- a lymph node position classifying unit CN-U for classifying CN the lymph node position N1, N2, N3 in respect of the tumor position T based on the lymphatic flow direction representation F1, F2, F3 in the reformatted image R.

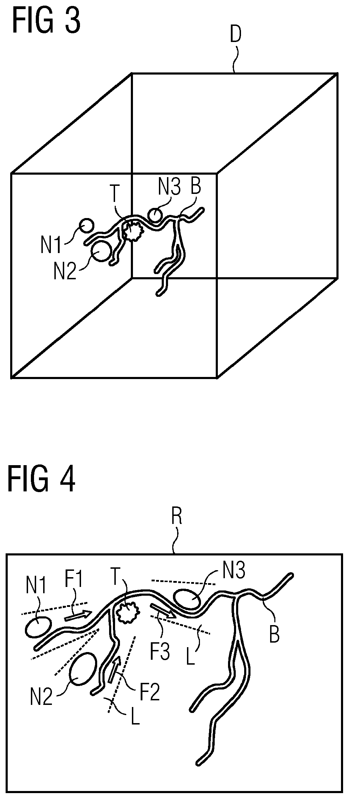

Fig. 3 shows an example of the medical imaging data D, comprising in a volume the arterial blood vessel structure B, the tumor position T, and the lymph node positions N1, N2 and N3.

Fig. 4 shows an example of the reformatted image R, comprising the arterial blood vessel structure B, the tumor position T, the lymph node positions N1, N2 and N3, an implicit view of the lymphatic system L, and the lymphatic flow direction representations F1, F2 and F3. The lymphatic flow direction in the lymphatic system L is inverse to the direction of the blood flow in the arterial blood vessel structure B. The lymph node position N1 is upstream of the tumor position T in respect of the lymphatic flow direction representation F1. The lymph node position N2 is upstream of the tumor position T in respect of the lymphatic flow direction representation F2. The lymph node position N3 is downstream of the tumor position T in respect of the lymphatic flow direction representation F3.

## Claims

1. Computer-implemented method for classifying a lymph node position (N1, N2, N3) in respect of a tumor position (T), comprising
- receiving (RI) medical imaging data (D),
- receiving (RA) lymphatic flow atlas data,
- determining (DT) the tumor position (T) in the medical imaging data (D),
- determining (DV) a vessel structure (B) in an area of the tumor position (L) in the medical imaging data (D), the vessel structure (B) being a blood vessel structure,
- generating (GR) a reformatted image (R) comprising an unfolded view of the vessel structure (B) in the area of the tumor position (L) based on the medical imaging data (D),
- generating (GF), in the reformatted image (R), a lymphatic flow direction representation (F1, F2, F3) based on the lymphatic flow atlas data,
- classifying (CN) the lymph node position (N1, N2, N3) in respect of the tumor position (T) based on the lymphatic flow direction representation (F1, F2, F3) in the reformatted image (R).

2. The method according to claim 1,
- wherein the lymph node position (N1, N2, N3) is classified as either downstream or upstream of the tumor position (T) in respect of the lymphatic flow direction representation (F1, F2, F3).

3. The method according to claim 1 or 2, wherein generating the reformatted image (R) comprises:
- calculating a curved planar reformation of the vessel structure (B).

4. The method according to one of the claims 1 to 3,
- wherein the reformatted image (R) further comprises the tumor position (T).

5. The method according to one of the claims 1 to 4, further comprising the following step:
- determining the lymph node position (N1, N2, N3) in the reformatted image (R).

6. The method according to claim 5, further comprising the following step:
- determining evaluation data comprising at least one of lymph node parameter data of a lymph node at the lymph node position (N1, N2, N3), tumor parameter data of a tumor at the tumor position (T), a distance between the lymph node position (N1, N2, N3) and the tumor position (T) along the vessel structure (B), and a lymphatic flow atlas information in respect of the lymphatic flow direction representation (F1, F2, F3), or a combination thereof.

7. The method according to claim 6, further comprising the following step:
- calculating a lymph node relevance parameter and/or a lymph node malignancy probability of the lymph node at the lymph node position (N1, N2, N3) based on the evaluation data.

8. The method according to claim 7, wherein the lymph node relevance parameter and/or the lymph node malignancy probability is calculated by applying a trained machine learning algorithm onto the evaluation data.

9. Data processing system (1) for classifying a lymph node position (N1, N2, N3) in respect of a tumor position (T), comprising
- a medical imaging data receiving unit (RI-U) for receiving (RI) medical imaging data (D),
- a lymphatic flow atlas data receiving unit (RA-U) for receiving (RA) lymphatic flow atlas data,
- a tumor position determining unit (DT-U) for determining (DT) the tumor position (T) in the medical imaging data (D),
- a vessel structure determining unit (DV-U) for determining (DV) a vessel structure (B) in an area of the tumor position (L) in the medical imaging data (D), the vessel structure (B) being a blood vessel structure,
- a reformatted image generating unit (GR-U) generating (GR) a reformatted image (R) comprising an unfolded view of the vessel structure (B) in the area of the tumor position (L) based on the medical imaging data (D),
- a lymphatic flow direction representation generating unit (GF-U) for generating (GF), in the reformatted image (R), a lymphatic flow direction representation (F1, F2, F3) based on the lymphatic flow atlas data,
- a lymph node position classifying unit (CN-U) for classifying (CN) the lymph node position (N1, N2, N3) in respect of the tumor position (T) based on the lymphatic flow direction representation (F1, F2, F3) in the reformatted image (R).

10. Data processing system (1) according to claim 9, configured to implement the method of one of the claims 1 to 8.

11. A computed tomography device, comprising a data processing system according to claim 9 or 10.

12. A computer program product comprising program elements which induce a data processing system (1) to carry out the steps of the method according to one of the claims 1 to 8, when the program elements are loaded into a memory of the data processing system (1).

13. A computer-readable medium on which program elements are stored that can be read and executed by a data processing system (1), in order to perform the steps of the method according to one of the claims 1 to 8, when the program elements are executed by the data processing system (1).

## Patentansprüche

1. Computerimplementiertes Verfahren zum Klassifizieren einer Lymphknotenposition (N1, N2, N3) in Bezug auf eine Tumorposition (T), umfassend:
- Empfangen (RI) von medizinischen Bildgebungsdaten (D),
- Empfangen (RA) von Lymphflussatlasdaten,
- Ermitteln (DT) der Tumorposition (T) in den medizinischen Bildgebungsdaten (D),
- Ermitteln (DV) einer Gefäßstruktur (B) in einem Bereich der Tumorposition (L) in den medizinischen Bildgebungsdaten (D), wobei die Gefäßstruktur (B) eine Blutgefäßstruktur ist,
- Generieren (GR) eines umformatierten Bildes (R), das eine entfaltete Ansicht der Gefäßstruktur (B) im Bereich der Tumorposition (L) basierend auf den medizinischen Bildgebungsdaten (D) umfasst,
- Generieren (GF) einer Lymphflussrichtungsdarstellung (F1, F2, F3), die auf den Lymphflussatlasdaten basiert, in dem umformatierten Bild (R),
- Klassifizieren (CN) der Lymphknotenposition (N1, N2, N3) in Bezug auf die Tumorposition (T) basierend auf der Lymphflussrichtungsdarstellung (F1, F2, F3) in dem umformatierten Bild (R).

2. Verfahren nach Anspruch 1,
- wobei die Lymphknotenposition (N1, N2, N3) als entweder nachgeordnet oder vorgeordnet der Tumorposition (T) in Bezug auf die Lymphflussrichtungsdarstellung (F1, F2, F3) klassifiziert wird.

3. Verfahren nach Anspruch 1 oder 2, wobei Generieren des umformatierten Bildes (R) umfasst:
- Berechnen einer gekrümmten planaren Umformatierung der Gefäßstruktur (B).

4. Verfahren nach einem der Ansprüche 1 bis 3,
- wobei das umformatierte Bild (R) des Weiteren die Tumorposition (T) umfasst.

5. Verfahren nach einem der Ansprüche 1 bis 4, des Weiteren umfassend den folgenden Schritt:
- Ermitteln der Lymphknotenposition (N1, N2, N3) in dem umformatierten Bild (R).

6. Verfahren nach Anspruch 5, des Weiteren umfassend den folgenden Schritt:
- Ermitteln von Evaluierungsdaten, die mindestens einen der Lymphknotenparameterdaten eines Lymphknotens an der Lymphknotenposition (N1, N2, N3), Tumorparameterdaten eines Tumors an der Tumorposition (T), einen Abstand zwischen der Lymphknotenposition (N1, N2, N3) und der Tumorposition (T) entlang der Gefäßstruktur (B) und Lymphflussatlasinformationen in Bezug auf die Lymphflussrichtungsdarstellung (F1, F2, F3) oder eine Kombination davon umfassen.

7. Verfahren nach Anspruch 6, des Weiteren umfassend den folgenden Schritt:
- Berechnen eines Lymphknotenrelevanzparameters und/oder einer Lymphknotenmalignizitätswahrscheinlichkeit des Lymphknotens an der Lymphknotenposition (N1, N2, N3) basierend auf den Evaluierungsdaten.

8. Verfahren nach Anspruch 7, wobei der Lymphknotenrelevanzparameter und/oder die Lymphknotenmalignizitätswahrscheinlichkeit berechnet wird bzw. werden, indem auf die Evaluierungsdaten ein trainierter "maschinelles Lernen"-Algorithmus angewendet wird.

9. Datenverarbeitungssystem (1) zum Klassifizieren einer Lymphknotenposition (N1, N2, N3) in Bezug auf eine Tumorposition (T), umfassend:
- eine medizinische Bildgebungsdaten empfangende Einheit (RI-U) zum Empfangen (RI) von medizinischen Bildgebungsdaten (D),
- eine Lymphflussatlasdaten empfangende Einheit (RA-U) zum Empfangen (RA) von Lymphflussatlasdaten,
- eine Tumorposition ermittelnde Einheit (DT-U) zum Ermitteln (DT) der Tumorposition (T) in den medizinischen Bildgebungsdaten (D),
- eine Gefäßstruktur ermittelnde Einheit (DV-U) zum Ermitteln (DV) einer Gefäßstruktur (B) in einem Bereich der Tumorposition (L) in den medizinischen Bildgebungsdaten (D), wobei die Gefäßstruktur (B) eine Blutgefäßstruktur ist,
- eine umformatiertes Bild generierende Einheit (GR-U) zum Generieren (GR) eines umformatierten Bildes (R), das eine entfaltete Ansicht der Gefäßstruktur (B) im Bereich der Tumorposition (L) basierend auf den medizinischen Bildgebungsdaten (D) umfasst,
- eine Lymphflussrichtungsdarstellung generierende Einheit (GF-U) zum Generieren (GF) einer Lymphflussrichtungsdarstellung (F1, F2, F3), die auf den Lymphflussatlasdaten basiert, in dem umformatierten Bild (R),
- eine Lymphknotenposition klassifizierende Einheit (CN-U) zum Klassifizieren (CN) der Lymphknotenposition (N1, N2, N3) in Bezug auf die Tumorposition (T) basierend auf der Lymphflussrichtungsdarstellung (F1, F2, F3) in dem umformatierten Bild (R).

10. Datenverarbeitungssystem (1) nach Anspruch 9, die zum Implementieren des Verfahrens nach einem der Ansprüche 1 bis 8 konfiguriert ist.

11. Computertomographievorrichtung, umfassend ein Datenverarbeitungssystem nach Anspruch 9 oder 10.

12. Computerprogrammprodukt, umfassend Programmelemente, die induzieren, dass ein Datenverarbeitungssystem (1) die Schritte des Verfahrens nach einem der Ansprüche 1 bis 8 durchführt, wenn die Programmelemente in einen Speicher des Datenverarbeitungssystems (1) geladen werden.

13. Computerlesbares Medium, auf dem Programmelemente gespeichert sind, die durch ein Datenverarbeitungssystem (1) gelesen und ausgeführt werden können, um die Schritte des Verfahrens nach einem der Ansprüche 1 bis 8 durchzuführen, wenn die Programmelemente durch das Datenverarbeitungssystem (1) ausgeführt werden.

## Revendications

1. Procédé mis en œuvre par ordinateur de classement de la position (N1, N2, N3) de ganglion lymphatique par rapport à la position (T) d'une tumeur, comprenant
- recevoir (RI) une donnée (D) d'imagerie médicale,
- recevoir (RA) une donnée d'atlas de courant lymphatique,
- déterminer (DT) la position (T) de la tumeur dans la donnée (D) d'imagerie médicale,
- déterminer (DV) une structure (B) de vaisseau dans une région de la position (L) de la tumeur dans la donnée (D) d'imagerie médicale, la structure (B) de vaisseau étant une structure de vaisseau sanguin,
- produire (GR) une image (R) reformatée comprenant une vue dépliée de la structure (B) de vaisseau dans la région de la position (L) de la tumeur sur la base de la donnée (D) d'imagerie médicale,
- produire (GF), dans l'image (R) reformatée, une représentation (F1, F2, F3) de la direction du courant lymphatique sur la base de la donnée d'atlas de courant lymphatique,
- classer (CN) la position (N1, N2, N3) des ganglions lymphatiques par rapport à la position (T) de la tumeur sur la base de la représentation (F1, F2, F3) de la direction du courant lymphatique dans l'image (R) reformatée.

2. Procédé suivant la revendication 1,
- dans lequel on classe la position (N1, N2, N3) des ganglions lymphatiques soit comme en aval, soit comme en amont de la position (T) de la tumeur par rapport à la représentation (F1, F2, F3) de la direction du courant lymphatique.

3. Procédé suivant la revendication 1 ou 2, dans lequel produire l'image (R) reformatée comprend :
- calculer une reformation plane incurvée de la structure (B) de vaisseau.

4. Procédé suivant l'une des revendications 1 à 3,
- dans lequel l'image (R) reformatée comprend en outre la position (T) de la tumeur.

5. Procédé suivant l'une des revendications 1 à 4, comprenant en outre le stade suivant :
- déterminer la position (N1, N2, N3) des ganglions lymphatiques dans l'image (R) reformatée.

6. Procédé suivant la revendication 5, comprenant en outre le stade suivant :
- déterminer une donnée d'évaluation comprenant au moins l'une d'une donnée de paramètre d'un ganglion lymphatique à la position (N1, N2, N3) du ganglion lymphatique, d'une donnée de paramètre d'une tumeur à la position (T) de la tumeur, d'une distance entre la position (N1, N2, N3) du ganglion lymphatique et la position (T) de la tumeur le long de la structure (B) de vaisseau et d'une information d'atlas de courant lymphatique par rapport à la représentation (F1, F2, F3) de la direction du courant lymphatique ou de leurs combinaisons.

7. Procédé suivant la revendication 6, comprenant en outre le stade suivant :
- calculer un paramètre de pertinence de ganglion lymphatique et/ou une probabilité de malignité de ganglion lymphatique du ganglion lymphatique à la position (N1, N2, N3) du ganglion lymphatique sur la base de la donnée d'évaluation.

8. Procédé suivant la revendication 7, dans lequel on calcule le paramètre de pertinence du ganglion lymphatique et/ou la probabilité de malignité du ganglion lymphatique en appliquant un algorithme d'apprentissage automatique à la donnée d'évaluation.

9. Système (1) de traitement de données pour classer une position (N1, N2, N3) de ganglions lymphatiques par rapport à une position (T) de tumeur, comprenant
- une unité (RI-U) de réception de données d'imagerie médicale pour recevoir (RI) des données (D) d'imagerie médicale,
- une unité (RA-U) de réception de données d'atlas de courant lymphatique pour recevoir (RA) des données d'atlas de courant lymphatique,
- une unité (DT-U) de détermination de position d'une tumeur pour déterminer (DT) la position (T) d'une tumeur dans la donnée (D) d'imagerie médicale,
- une unité (DV-U) de détermination d'une structure de vaisseau pour déterminer (DV) une structure (B) de vaisseau dans une région de la position (L) d'une tumeur dans la donnée (D) d'imagerie médicale, la structure (B) de vaisseau étant une structure de vaisseau sanguin,
- une unité (GR-U) de production d'une image reformatée produisant (GR) une image (R) reformatée comprenant une vue dépliée de la structure (B) de vaisseau dans la région de la position (L) de la tumeur sur la base de la donnée (D) d'imagerie médicale,
- une unité (GF-U) de production d'une représentation d'une direction de courant lymphatique pour produire (GF), dans l'image (R) reformatée, une représentation (F1, F2, F3) de la direction du courant lymphatique sur la base de la donnée d'atlas de courant lymphatique,
- une unité (CN-U) de classification de position de ganglions lymphatiques pour classer (CN) la position (N1, N2, N3) de ganglions lymphatiques par rapport à la position (T) de la tumeur sur la base de la représentation (F1, F2, F3) de la direction du courant lymphatique dans l'image (R) reformatée.

10. Système (1) de traitement de données suivant la revendication 9, configuré pour mettre en œuvre le procédé suivant l'une des revendications 1 à 8.

11. Dispositif de tomodensitométrie assisté par ordinateur, comprenant un système de traitement de données suivant la revendication 9 ou 10.

12. Produit de programme d'ordinateur comprenant des éléments de programmes qui font qu'un système (1) de traitement de données effectue les stades du procédé suivant l'une des revendications 1 à 8, lorsque les éléments du programme sont chargés dans une mémoire du système (1) de traitement de données.

13. Support déchiffrable par ordinateur, sur lequel sont mis en mémoire des éléments de programme qui peuvent être déchiffrés et exécutés par un système (1) de traitement de données, afin d'effectuer les stades du procédé suivant l'une des revendications 1 à 8, lorsque les éléments de programme sont exécutés par le système (1) de traitement de données.
